# EUROPEAN PATENT SPECIFICATION

(11) **EP 0 941 664 B1**
(45) Date of publication and mention of the grant of the patent: **07.07.2004**
(21) Application number: 99103419.0
(22) Date of filing: 23.02.1999
(51) Int. Cl.: A22C 15/00

(54) **Means for hanging foodstuffs**
Mittel zum Aufhängen von Nahrungsmitteln
Moyens pour suspendre des produits alimentaires

(30) Priority: 23.02.1998 IT MO980037; 14.04.1998 IT MO980083
(43) Date of publication of application: 15.09.1999
(73) Proprietor: VE.MA.C. S.R.L., 41051 Castelnuovo Rangone (Modena) (IT)
(72) Inventor: Malagoli, Uliano, 41041 Casinalbo (MO) (IT); Vezzali, Franco, 41057 Spilamberto (MO) (IT); Costantini, Maurizio, 41057 Spilamberto (IT)
(74) Representative: Luppi, Luigi

(56) References cited:
- EP-A- 0 107 148
- EP-A- 0 424 675
- WO-A-93/20702
- US-A- 1 350 632
- US-A- 4 004 770

## Description

The invention relates to a means for hanging items, in particular foodstuffs such as salami, on supporting sticks.

IT-A-MO92A000022 discloses a machine for hanging items on rod-shaped supports, in which the items are initially hung at an eyelet-shaped end from hooks provided with lower fork-shaped appendices by means of which the items are slided axially along a rod-shaped support while respective eyelets on the items are positioned around the body of the rod-shaped support. The fork hooks are made to tip over in order to allow the products to fall into pre-established positions in such a way that the eyelets engage from above with, and are supported on, the rod-shaped support.

In a machine of this type it is difficult to hang the products on the fork hooks because an operator must simultaneously carry out hooking to both appendices of the fork hook in order to allow the product to hang in such a way that its eyelet-shaped end is free for the rod-shaped support to be introduced into it.

Furthermore, in order to maintain each rod-shaped support in an operative position, there is provided a gripper means which acts on both ends of it. In particular, the end from which the products are introduced has a plurality of grippers which are opened and closed in sequence to allow the products to travel along the body of the support while maintaining the end engaged. The sequential opening and closing movements of the grippers are problematical because they must be suitably synchronised, in accordance with the transversal dimensions of the products and the step with which they must be deposited on the rod-shaped support.

EP-A-0107148 discloses supporting means suitable for receiving a looped-shaped portion of products to be supported, which has a rod-shaped body comprising helicoidal corrugations and an appendix projecting from one end of said supporting means.

In view of EP-A-0 107 148, the skilled person has to solve a problem consisting in improving introduction of looped-shaped portions of objects on supporting means.

The invention solves the above-mentioned problem by providing the appendix projecting from a free end of the supporting means provided with helicoidal corrugation between which the looped-shaped portions can be received.

The supporting means may be a definitive supporting means, in other words intended to support the products for the entire duration of subsequent processing and/or seasoning, or it may be an intermediate supporting means, from which the products must subsequently be transferred onto a separate definitive supporting means.

The provision of helicoidal corrugations permits precise positioning of the products in a very simple manner.

The invention can be better understood and put into practice with reference to a description of the attached drawings, which illustrate an example of construction in which:
Figure 1 is a front view of a machine for hanging products, in particular dressed pork products such as salami;
Figure 2 is a side view of the machine shown in Figure 1;
Figure 3 is an enlarged view of a rocking means for lifting products;
Figure 4 is a detail, enlarged and cut away, of an introducing means for introducing the products onto rod-shaped supports;

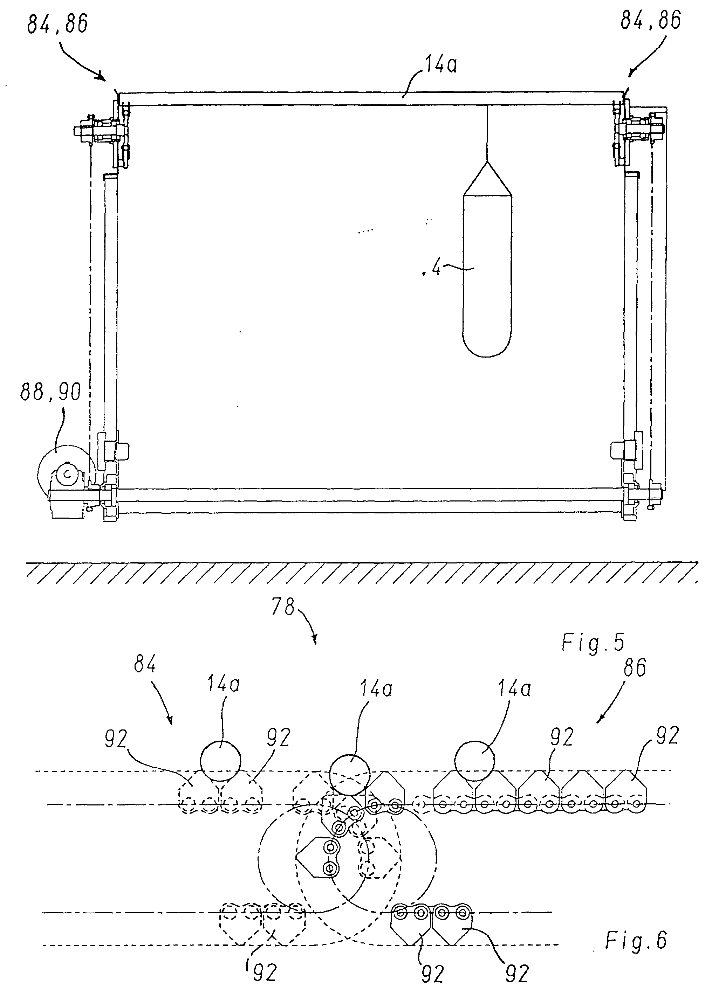

Figure 5 is the sectional view V-V of Figure 2;
Figure 6 is a detail, enlarged and interrupted, of a transfer zone of the supporting means between consecutive conveying means;
Figure 7 is a schematic view, enlarged and interrupted, of a coupling means for coupling the point means to the intermediate supporting means with the gripper means shown in the free and operative positions, separated by a rotation of 90°;
Figure 8 is a side view of the gripper means of Figure 7;
Figure 9 is a schematic view of the gripper means in the operative position for insertion of the point means;

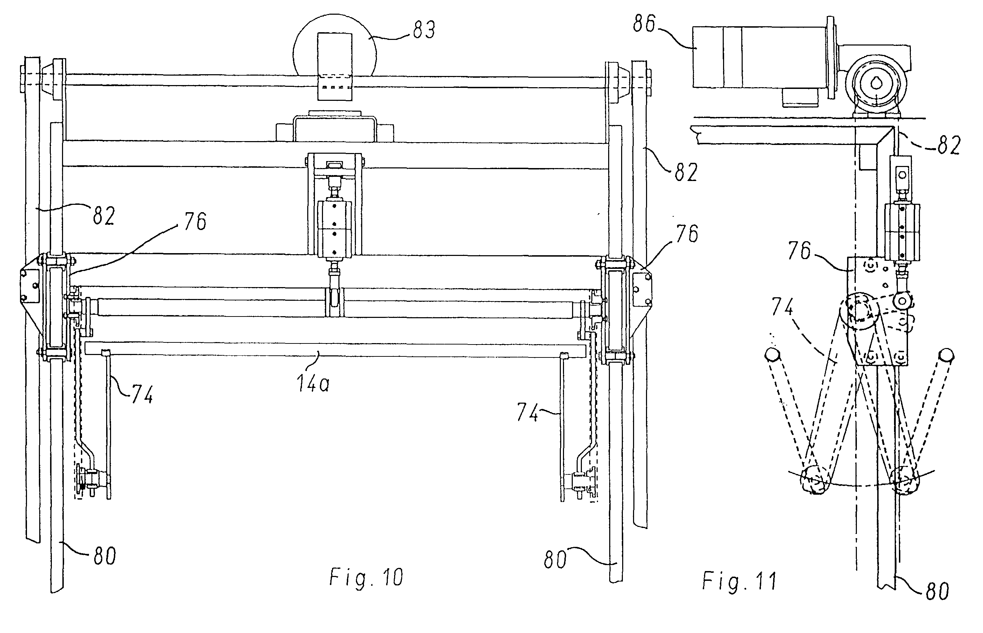

Figure 10 is an enlarged and interrupted view of the arm positioning means for positioning the supporting means;
Figure 11 is a right-hand view of Figure 10;
Figure 12 is an interrupted view of the intermediate supporting means, provided at one end with a hook-shaped appendix for facilitating the introduction of a loop-shaped portion of products onto said intermediate supporting means;
Figure 13 is a side view of the intermediate supporting means of Figure 12;
Figure 14 is a view of a product row-forming station, in which the intermediate supporting means of Figure 12 is used;
Figure 15 is a side view of the forming station of Figure 14, showing a coupling between the intermediate supporting means and the rocking means for lifting products.

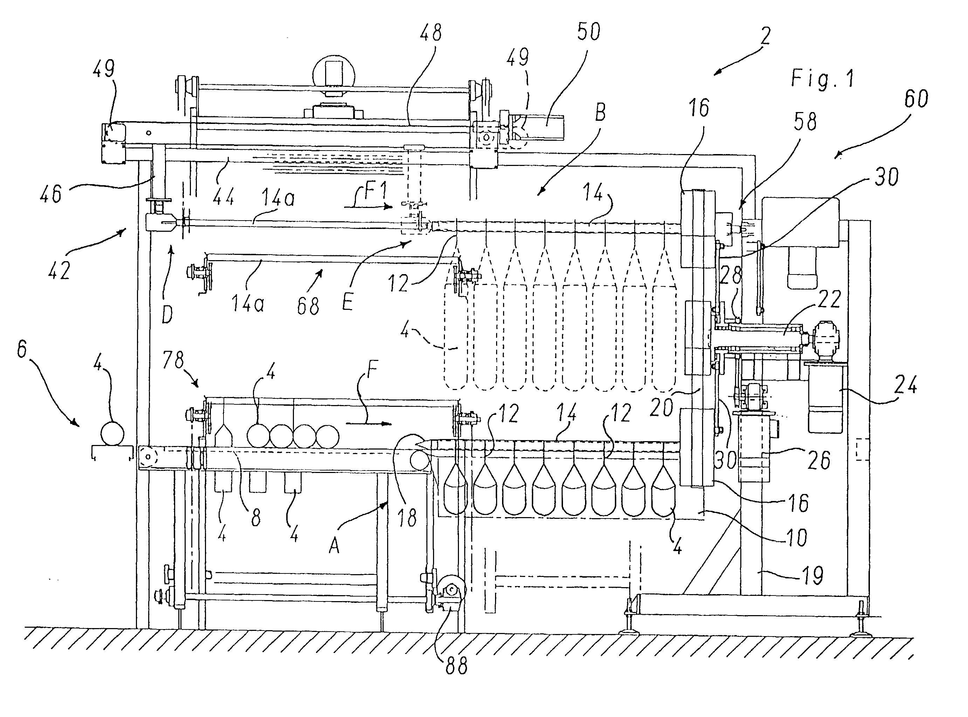

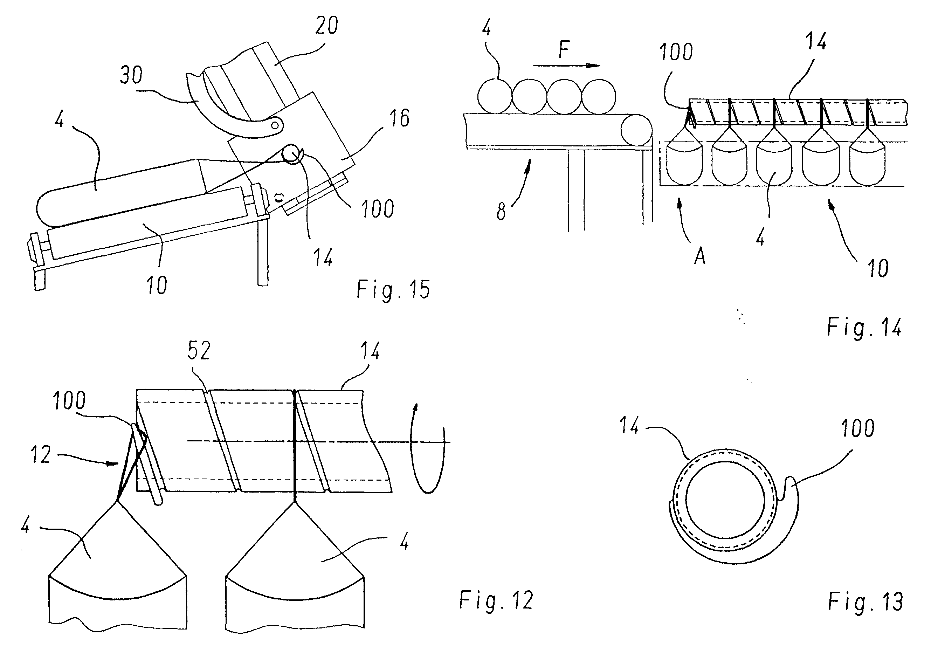

As shown in Figure 1, a machine 2 for hanging products 4 comprises a product feeding line 6 which ends at a first conveying means 8, consecutive to which there is arranged a second conveying means 10; the first conveying means 8 and the second conveying means 10 are arranged transversally relative to the line 6 and the products 4 can be transported whilst they are positioned transversally on them. The first conveying means 8 defines a horizontal conveying surface for products 4 along the direction shown by the arrow F, while the second conveying means 10 defines an inclined conveying surface for the products 4, in such a way that a loop-shaped or eyelet-shaped portion 12 of each product 4 can engage in an intermediate rod-shaped supporting means 14, one end of which is fixed to a respective sliding block 16. A further end of the intermediate supporting means 14 is advantageously associated with an appendix 100 (Figure 13), or with point means 18, capable of facilitating insertion of the loop-shaped portion 12 of each product 4 onto said intermediate supporting means.

This way the products 4 coming from the feeding line 6 are aligned alongside each other on the conveying means 8, 10 and can be moved forward in steps by the second conveying means 10 while they are engaged with the eyelet-shaped portions 12 on the intermediate supporting means 14 by way of a drive means not illustrated.

Rocking means 20 is supported in a rotating manner on a frame body 19 and serves as a guide for a pair of sliding blocks 16 engaged to move along the rocking means 20 by a suitable drive means 26 and a transmission means 28 comprising bow-shaped connecting rods 30. An intermediate portion of the rocking means 20 is engaged by a shaft 22 which is made to oscillate around its own longitudinal axis by a drive means 24 in such a way as to make the rocking means 20 perform angular movements with an amplitude of approximately 180° in one direction and in the opposite direction.

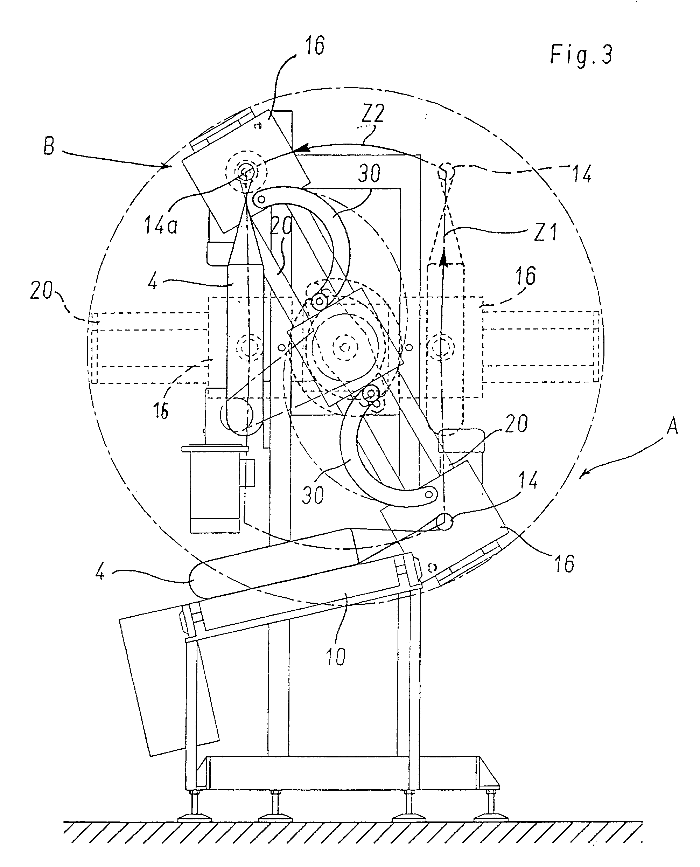

It is thus possible to make the sliding blocks 16 slide simultaneously towards the ends or towards the intermediate portion of the rocking means 20 while the rocking means 20 is made to oscillate by the shaft 22 in order to move the rod-shaped intermediate supporting means 14 from a station A for forming a row of products 4 to a formed row transfer station B, and vice versa, as shown schematically in Figure 3. For reasons of size, it is preferable for the transfer station B to be placed in a raised position and the row-forming station A to be located in a low position, substantially at the same level as the feeding line 6.

The combined movement of the sliding blocks 16 on the rocking means 20 is such that the products 4 are raised according to a trajectory that comprises an initial substantially vertical section Z1 and a final curved section Z2. This limits the oscillations of the products 4 during transfer.

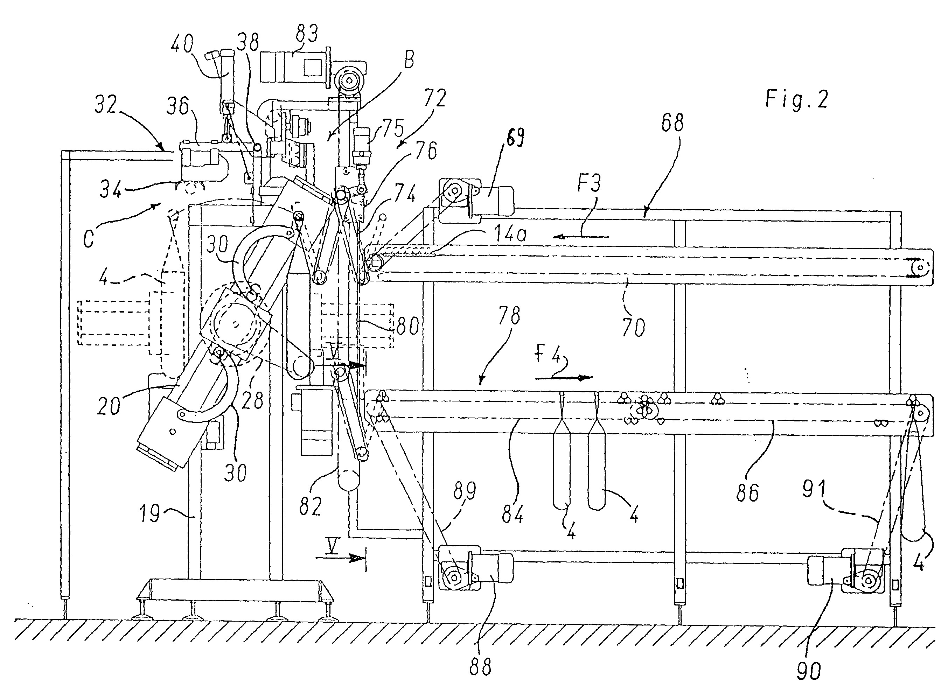

As shown in Figure 2, in the transfer station B the rod-shaped intermediate supporting means 14, if associated with the point means 18, is divested of said means 18 by the action of gripper means 32 provided with jaws 34 capable of grasping the point means 18 and moving it from the position in which it is inserted on the rod-shaped intermediate supporting means 14 to a neutral waiting position C in which the point means 18 is not engaged on the rod-shaped intermediate supporting means 14. For this purpose, the gripper means 32 is coupled with an angular positioning rod 36 hinged at one end to a pin 38 and capable of being moved in an angular direction by way of a pneumatic cylinder 40.

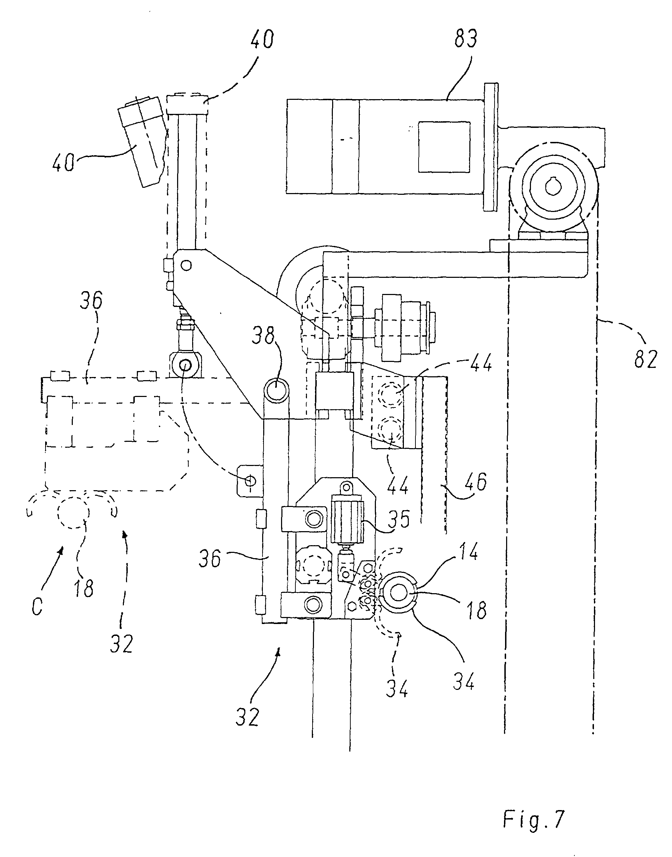

As shown in Figure 7, the jaws 34 can be actuated by a pneumatic cylinder 35 to close and open on the external peripheral surface of the point means 18.

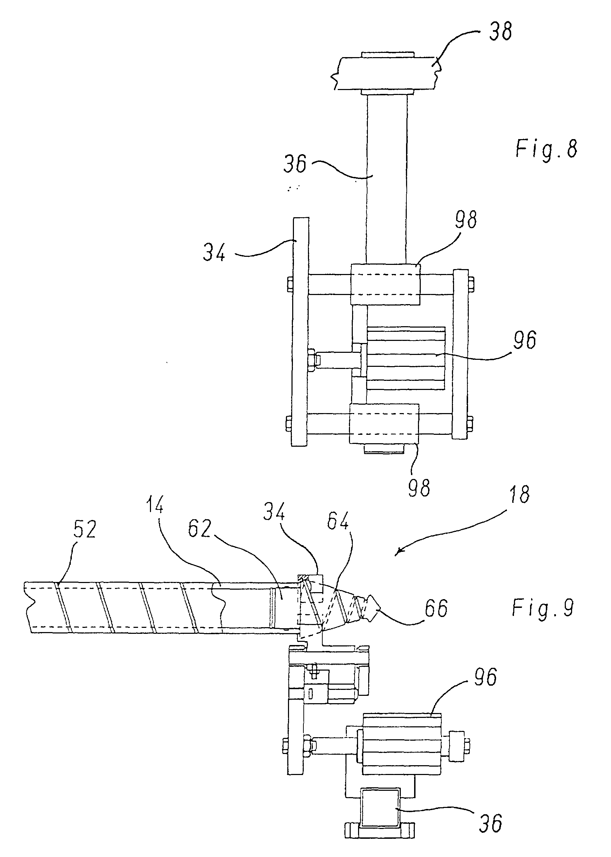

As shown in Figures 8 and 9, the jaws 34 can be moved in a guided fashion by guide bushings 98 in a direction parallel to the axis of the intermediate supporting means 14 by way of a suitable pneumatic cylinder 96.

If the further end of the intermediate supporting means 14 is associated with the appendix 100, the gripper means 32 is not necessary.

Since the rod-shaped intermediate supporting means 14 is advantageously tubular, after its end has been freed from the point means 18, it is possible to introduce into it a rod-shaped further supporting means, or supporting means, 14a making it enter axially through the free end of the intermediate supporting means 14 in the direction shown by the arrow F1 under the action of a further gripper means 42 supported by an arm 46 on a crossbeam 44 of the frame 19 extending along direction F1.

A belt 48, interconnected with the arm 46 and closed on end pulleys 49 to form a ring and driven by a geared motor means 50, permits alternating linear sliding of the further gripper means 42 along the crossbeam 44 so as to move the rod-shaped further supporting means 14a from an external position D, in which it is completely outside of and aligned with the intermediate supporting means 14, to an internal position E, in which the further supporting means 14a is inserted inside the intermediate tubular supporting means 14, and vice versa.

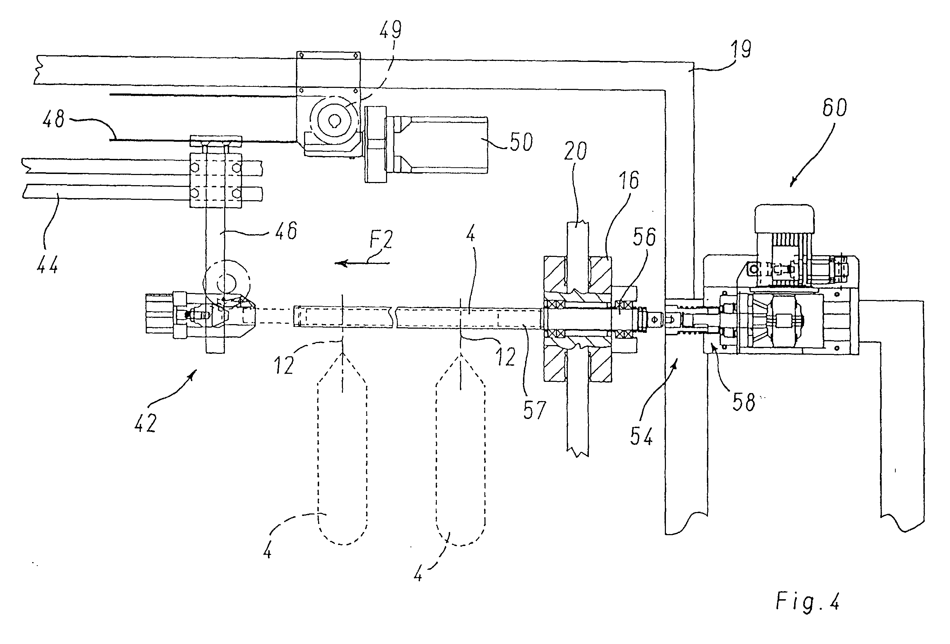

As shown in Figure 4, after the further supporting means 14a has been moved to the internal position E, the intermediate supporting means 14 is made to rotate around its longitudinal axis so that the products 4 are moved along the intermediate supporting means in the direction F2 opposite to direction F1.

This is made possible by the presence of a helicoidal groove 52 (Figure 9) obtained externally to the intermediate supporting means 14 and by a spindle means 54 which acts in the transfer station B on a spindle shaft 56 supported in a rotating manner inside the sliding blocks 16 and provided with an operative end 57 coupled internally with the rod-shaped intermediate supporting means 14. A coupling means 58 and a rotational drive means 60 supported on portions of the frame 19 allow the rod-shaped intermediate supporting means 14 to be given the desired rotational movement in the row transfer station B. Therefore the products 4, which have their respective loop-shaped portions 12 engaged in longitudinally consecutive zones of the intermediate supporting means 14, travel along the supporting means 14 in the direction F2 from the intermediate supporting means 14 to the further supporting means 14a. A sensor, which is not shown, acts on the rotational drive means 60 in order to interrupt the command for rotation of the intermediate supporting means 14, and actuates a command to move the further gripper means 42 which extracts the further supporting means 14a from the intermediate supporting means 14 by an amount corresponding to the desired linear step of the products 4 on the further supporting means 14a.

An analogous rotational drive means, which is not shown, may also be provided in the row-forming station A to facilitate insertion of the loop-shaped portions 12 on the intermediate supporting means 14.

As shown in Figure 9, the point means 18 has a tang 62 inserted inside the intermediate supporting means 14, and is externally provided with a helicoidal channel 64 to facilitate insertion of the loop-shaped portions 12 on the intermediate supporting means 14. Furthermore, the point means 18 is provided at its free end opposite tang 62 with an annular projection 66 capable of preventing the loop-shaped portions 12 from coming disengaged from the point means 18 in the row-forming station when they are inserted on the intermediate supporting means 14.

In the version shown in Figures from 12 to 15, the intermediate supporting means 14 is provided, at its further end, with the appendix 100 which projects laterally from the profile of the intermediate supporting means 14 with a shape that advantageously constitutes an extension of the helicoidal groove 52. This way an operator can easily introduce the loop-shaped portions 12 of the products 4 onto the intermediate supporting means 14 by hooking them onto the appendix 100 and thereby obliging these portions 12 to engage and slide along the helicoidal groove 52 during the rotation of the intermediate supporting means 14 around its longitudinal axis.

Furthermore, the shape of the helicoidal shaped appendix 100 is such as not to obstruct transfer of the products 4 from the intermediate supporting means 14 to the further supporting means 14a in the transfer station B.

As shown in Figure 2, the further supporting means 14a is moved to the transfer station B from a feeding means 68 comprising a pair of chains 70 wound to form a ring and driven by a drive means 69 and arranged in such a way as to support both ends of the further supporting means 14a and to make it advance towards the row-transfer station B in the direction shown by arrow F3. Preferably, the pair of chains 70 defines a conveying surface for the further supporting means 14a arranged almost at the same height as the row-transfer station B. Between the end of the feeding means 68 and the row-transfer station B there is interposed a pick-up and transfer means 72 comprising oscillating arms 74 which can be moved in an angular direction by a pneumatic cylinder 75 on a slide means 76 between a pick-up position in which it engages end zones of the further supporting means 14a from below one at a time, and a delivery position in which it leaves the further supporting means 14a available for the action of the further gripper means 42. This way it is possible to move the further supporting means 14a on which it is desired to position the products 4 to the transfer station B one after another in sequence. When the further supporting means 14a has been extracted from the intermediate supporting means 14 and is loaded with the products 4 separated according to a pre-established linear step, the oscillating arms 74 position themselves below the further supporting means 14a and receive the products and then transfer them to the outfeed means 78 below. This occurs by way of vertical sliding of the slide means 76 along a respective upright means 80 due to the action of a belt drive 82 driven by a geared motor 83 and wound onto respective pulleys to form a ring.

The outfeed means 78 of the further supporting means 14a with the products 4 hanging from it is positioned almost at the same height as the row-forming station A.

The outfeed means 78 comprises a first pair of chains 84 and a second pair of chains 86 arranged consecutively relative to the first pair of chains 82 driven by separate drive means 88, 90 coupled respectively to the pairs of chains 84, 86 by way of respective flexible transmission units 89, 91. The further supporting means 14a are progressively unloaded onto the outfeed means 78 as they are picked up from row-transfer station B by the oscillating arms 74.

In particular, the further supporting means 14a is deposited on the first pair of chains 84 and is moved in steps towards the outfeed in the direction shown by the arrow F4 until there is formed a loading layer of products 4 of a storage means, which is not shown, according to the characteristics of the production plant. When a layer of products 4 has been formed on the first pair of chains 84, it is transferred integrally to the second pair of chains 86 where it remains waiting to be picked up by a conveying means towards the storage means, while the oscillating arms 74 can transfer the further supporting means 14a which in the meantime has become free at the row-transfer station B.

Preferably, the pairs of chains 84, 86 are provided externally with formations of teeth 92 defining spaces capable of receiving end zones of the further supporting means 14a.

The distinction between an intermediate supporting means 14 and a supporting means 14a is advantageous for the purposes of costs, given that the supporting means 14a does not require a helicoidal groove 52.

Therefore in principle solely an intermediate supporting means 14 could be adopted, in which case the row-transfer station B would not be necessary.

## Claims

1. Supporting means (14) suitable for receiving loop-shaped portions (12) of products (4) to be supported, comprising an appendix (100) projecting from one end of said supporting means (14) and capable of facilitating the introduction of each said loop-shaped portion (12) onto said supporting means and helicoidal corrugations (52) arranged for receiving said looped-shaped portions (12), **characterised in that** said one end is a free end of said supporting means (14).

2. Supporting means (14) according to claim 1, wherein said appendix (100) has the shape of a hook.

3. Supporting means (14) according to claim 1, or 2, wherein said appendix (100) has a shape that forms an extension of said helicoidal corrugations (52).

4. Supporting means according to any one of claims 1 to 3, wherein said helicoidal corrugations comprise helicoidal grooves (52).

5. Supporting means (14) according to claim 4, wherein said appendix (100) comprises a portion connected to said supporting means and arranged parallelly to said helicoidal grooves (52).

6. Supporting means (14) according to any one of the preceding claims, wherein said appendix (100) has a free end end protruding from said supporting means (14).

7. Supporting means (14) according to any one of the preceding claims, and further comprising a rod-shaped body.

8. Supporting means (14) according to claim 5, wherein said rod-shaped body is a tubular body.

9. Supporting means (14) according to any one of the preceding claims, wherein said appendix (100) is so shaped as not to obstruct discharge of said products (4) from said supporting means (14).

## Patentansprüche

1. Stützeinrichtung (14), geeignet zur Aufnahme von schlingenförmigen Bereichen (12) von Produkten (4), die gehalten werden sollen, umfassend einen Anhang (100), der von einem Ende der Stützeinrichtung (14) hervorsteht und dazu ausgebildet ist, die Einführung jedes der schlingenförmigen Abschnitte (12) auf das Aufnahmemittel zu erleichtern, sowie schraubenförmige Rillen (52), die dazu ausgebildet sind, die schlingenförmigen Bereiche (12) aufzunehmen, **dadurch gekennzeichnet, dass** das eine Ende ein freies Ende der Stützeinrichtung (14) ist.

2. Stützeinrichtung (14) nach Anspruch 1, bei der der Ansatz (100) die Form eines Hakens hat.

3. Stützeinrichtung (14) nach Anspruch 1 oder 2, bei der der Ansatz (100) eine Form hat, die eine Verlängerung der schraubenförmigen Rillen (52) bildet.

4. Stützeinrichtung gemäß irgendeinem der Ansprüche 1 bis 3, bei der die schraubenförmigen Rillen schraubenförmige Nuten (52) umfassen.

5. Stützeinrichtung (14) nach Anspruch 4, bei der der Fortsatz (100) einen Bereich umfasst, der mit der Stützeinrichtung verbunden ist und parallel zu den schraubenförmigen Nuten (52) angeordnet ist.

6. Stützeinrichtung (14) nach irgendeinem der vorhergehenden Ansprüche, bei der der Fortsatz (100) ein freies Ende aufweist, das von der Stützeinrichtung (14) hervorsteht.

7. Stützeinrichtung (14) nach irgendeinem der vorhergehenden Ansprüche, die ferner einen stangenförmigen Körper aufweist.

8. Stützeinrichtung (14) nach Anspruch 5, bei der der stangenförmige Körper ein rohrförmiger Körper ist.

9. Stützeinrichtung (14) nach irgendeinem der vorhergehenden Ansprüche, bei der der Fortsatz (100) derart geformt ist, dass er eine Ausgabe der Produkte (4) von der Stützeinrichtung (14) nicht behindert.

## Revendications

1. Moyens de suspension (14) adaptés pour recevoir des portions (12) en forme de boucle de produits (4) à suspendre, comprenant un appendice (100) dépassant d'une extrémité desdits moyens de suspension (14) et capables de faciliter l'introduction de chaque dite portion (12) en forme de boucle sur lesdits moyens de suspension, et des striures hélicoïdales (52) disposées pour recevoir lesdites portions (12) en forme de boucle, ***caractérisés en ce que*** ladite une extrémité est une extrémité libre desdits moyens de suspension (14).

2. Moyens de suspension (14) selon la revendication 1, dans lesquels ledit appendice (100) a la forme d'un crochet.

3. Moyens de suspension (14) selon la revendication 1 ou 2, dans lesquels ledit appendice (100) a une forme qui forme une extension desdites striures hélicoïdales (52).

4. Moyens de suspension (14) selon l'une quelconque des revendications 1 à 3, dans lesquels lesdites striures hélicoïdales comprend des cannelures hélicoïdales (52).

5. Moyens de suspension (14) selon la revendication 4, dans lesquels ledit appendice (100) comprend une portion raccordée auxdits moyens de suspension et disposées parallèlement auxdites cannelures hélicoïdales (52).

6. Moyens de suspension (14) selon l'une quelconque des revendications précédentes, dans lesquels ledit appendice (100) a une extrémité libre saillant desdits moyens de suspension (14).

7. Moyens de suspension (14) selon l'une quelconque des revendications précédentes, et comprenant de plus un corps en forme de barre.

8. Moyens de suspension (14) selon la revendication 5, dans lesquels ledit corps en forme de barre est un corps tubulaire.

9. Moyens de suspension (14) selon l'une quelconque des revendications précédentes, dans lesquels ledit appendice (100) est conformé de manière à ne pas obstruer le déchargement desdits produits (4) desdits moyens de suspension (14).
